**Europäisches Patentamt**

**European Patent Office**

**Office européen des brevets**

(19)

(11) Veröffentlichungsnummer: **0 040 673 B1**

(12) **EUROPÄISCHE PATENTSCHRIFT**

(45) Veröffentlichungstag der Patentschrift:
**11.07.84**

(51) Int. Cl.³: **B 23 K 9/08**

(21) Anmeldenummer: **81101818.3**

(22) Anmeldetag: **12.03.81**

(54) **Vorrichtung zum elektrischen Lichtbogenschweissen.**

(30) Priorität: **13.05.80 DE 3018199**

(43) Veröffentlichungstag der Anmeldung:
**02.12.81 Patentblatt 81/48**

(45) Bekanntmachung des Hinweises auf die Patenterteilung:
**11.07.84 Patentblatt 84/28**

(84) Benannte Vertragsstaaten:
**AT BE CH DE FR GB IT LI LU NL SE**

(56) Entgegenhaltungen:
**DE - A - 2 321 070**
**DE - A - 2 339 818**
**DE - A - 2 815 751**
**US - A - 2 931 889**
**US - A - 4 222 021**

(73) Patentinhaber: **KUKA Schweissanlagen & Roboter GmbH, Zugspitzstrasse 140, D-8900 Augsburg (DE)**

(72) Erfinder: **Pache, Norbert, Zusmarshauser Weg 7a, D-8900 Augsburg (DE)**
Erfinder: **Mazac, Karel, Dalienweg 1, D-8904 Friedberg (DE)**

(74) Vertreter: **Ernicke, Hans-Dieter, Dipl.-Ing., Schwibbogenplatz 2b, D-8900 Augsburg (DE)**

**Beschreibung**

Die Erfindung betrifft eine Vorrichtung zum elektrischen Lichtbogenschweissen mit magnetisch bewegtem Lichtbogen zweier anschmelzender Werkstücke, vorzugsweise Rohrenden, Ringe od. dgl. an einer geschlossenen Nahtbahn mit mindestens zwei in der Schweissebene radial zur Nahtbahn angeordneten gleichpoligen Magneten, deren jeweils eine Spulenwicklung tragenden aus Flachmaterial bestehende ferromagnetische Kerne mit ihren Hauptflächen annähernd parallel zur Schweissebene verlaufen und die an ihrem der Nahtbahn zugewandten Ende jeweils eine dem Verlauf der Nahtbahn angepasste, diese annähernd vollständig überdeckende bogenartige Ausnehmung aufweisen. Die jeweils den einzelnen Kernen bzw. Magneten zuzuordnenden Ausnehmungen bilden also jeweils einen von mindestens zwei Bögen, die zusammen einen die Nahtbahn umschliessenden Kreis ergeben.

Eine solche Anordnung ist beispielsweise durch die DE-OS Nr. 2815751 bekannt. Diese Anordnung besteht aus zwei Magneten, bei denen sich jeweils das nahtbahnseitige Ende des einzelnen Kerns gegenüber dem die Wicklung tragenden Teil verbreitert zu einem jeweils die Hälfte der Nahtbahn umgebenden Halbzylinder. Durch diese Verbreiterung des Kerns wird die Flussdichte verringert, so dass sich im Bereich der Nahtbahn nur eine verhältnismässig geringe Feldkonzentration ergibt.

Bei einer anderen Anordnung gemäss der DE-OS Nr. 2321070 sind mehrere, radial angeordnete Einzelmagnete auf einem die Nahtbahn umgebenden, magnetisierbaren Ring vereinigt. Auch bei dieser Anordnung ist die maximal erzielbare Feldstärke begrenzt.

Der Erfindung liegt die Aufgabe zugrunde, gegenüber der eingangs genannten Schweissvorrichtung eine Anordnung zu schaffen, bei der im Bereich der Nahtbahn eine möglichst grosse Feldkonzentration erreicht werden kann, die also bei gleicher Bauhöhe bzw. gleicher Amperewindungszahl grösser ist als bei der vorbekannten Anordnung.

Gemäss der Erfindung wird diese Aufgabe dadurch gelöst, dass die Sehne des Bogens der jeweiligen Ausnehmung kleiner ist als die sich in der Schweissebene erstreckende Innenabmessung der Spulenwicklung.

Bei einfacher Ausführungsform der Erfindung sind zwei Magnete mit gegenüberliegendem Kern vorgesehen, bei denen die jeweilige bogenartige Ausnehmung am nahtbahnseitigen Ende der Form eines Halbzylinders entspricht. Bei Anordnung von mehr als zwei Magneten ist die Sehne des Bogens der jeweiligen Ausnehmung entsprechend kleiner, wobei vorteilhafterweise benachbarte Kerne an ihren nahtbahnseitigen Enden unter Bildung eines radialen Schlitzes abgeschrägt sind.

Um die Beschickung der Vorrichtung zu erleichtern, kann es in manchen Fällen vorteilhaft sein, dass die Magnete durch zwei die Wicklungen tragende Kerne aufweisende einstückige Körper gebildet sind, die mit einer durch die bogenartigen Ausnehmungen gebildeten halbzylindrischen Innenfläche einander gegenüberliegend angeordnet und gegeneinander um eine zu der Schweissebene senkrechte Achse verschwenkbar sind.

Eine weitere Steigerung der Feldkonzentration wird noch dadurch erreicht, dass die Dicke der einzelnen Kerne am nahtbahnseitigen Ende verringert ist, etwa durch entsprechende Abstufungen, Abschrägungen oder Verjüngungen des Kernquerschnitts. Durch diese Querschnittsverminderungen im Bereich des Feldlinienaustritts gegenüber dem die Wicklung tragenden Teil des Kerns wird zusätzlich zu der durch die vorerwähnte Begrenzung der Sehnenlänge erzielten Flussverdichtung die Dichte des magnetischen Flusses im Bereiche des Austritts der auf den Lichtbogen einwirkenden Feldlinien erhöht.

Um die bei der Durchführung der erfindungsgemässen Massnahmen zur Erzeugung grösserer Feldkonzentrationen entstehende Wärme gering zu halten, empfiehlt es sich, dass die Kerne in ihrem Inneren Kanäle für den Durchfluss eines Kühlmittels aufweisen. Hierzu trägt auch ein durch mindestens einen Kern verlaufender, an der Ausnehmung endender Kanal zum Zuführen von Schutzgas bei.

Die Erfindung ist in der Zeichnung beispielsweise und schematisch dargestellt. Es zeigen:

Fig. 1 und 2 eine aus zwei Magneten bestehende Anordnung in Draufsicht und Seitenansicht, teilweise im Schnitt;

Fig. 3 eine Anordnung mit vier Magneten, und

Fig. 4 eine Variante der Anordnung gemäss Fig. 3.

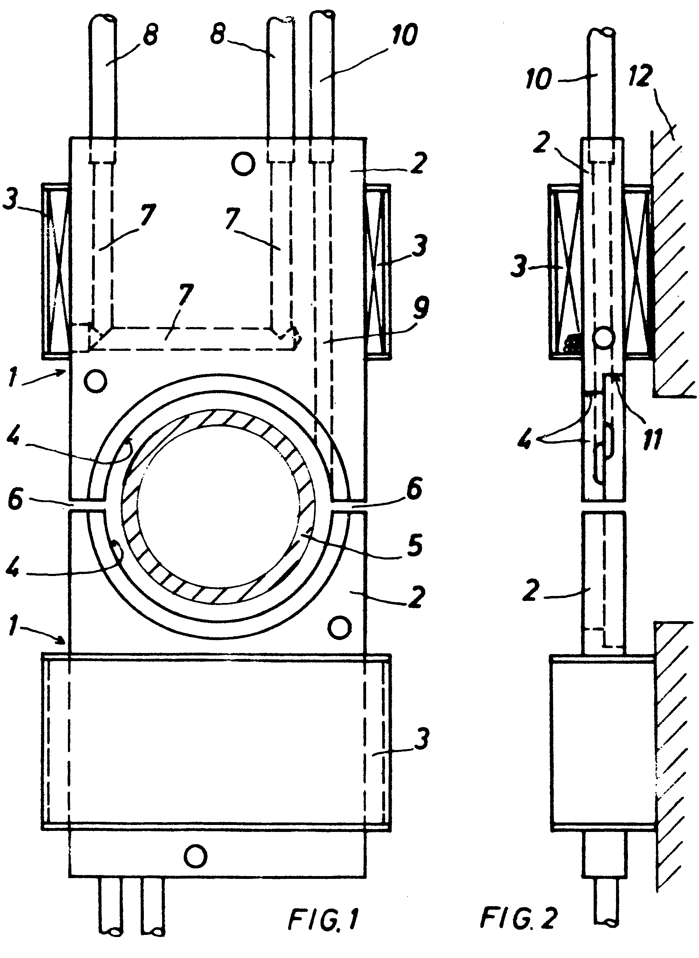

Die Anordnung gemäss Fig. 1 umfasst zwei Magnete, bestehend jeweils aus einem im dargestellten Beispiel sehr flach ausgebildeten ferromagnetischen Kern 2 aus Flachmaterial, auf dem eine elektrische Wicklung 3 aufgebracht ist. Die einander gegenüberliegenden, in der Draufsicht halbkreisförmige Kontur aufweisenden Enden der Magnete 1 haben die Form eines Halbzylinders, dessen Innenfläche die Innenseite der die zu verschweissenden Rohrquerschnitte 5 einschliessenden Ausnehmungen 4 bilden. Die Lücken 6 an den äusseren Rändern der gegenüberliegenden Enden der Magnete 1 sind sehr gering und praktisch vernachlässigbar und dienen lediglich der Möglichkeit, die Magnete bei Bedarf zu trennen.

Die Magnete 1 bzw. ihre Kerne 2 sind von Kanälen 7 (durch gestrichelte Linien im oberen Teil der Fig. 1 angedeutet) durchzogen, an die Kühlwasserleitungen 8 angeschlossen sind. Ein weiterer, im Kerninneren verlaufender, an der Ringinnenfläche endender Kanal 9 ist mit einer Leitung 10 zum Zuführen von Schutzgas verbunden. Die Innenfläche der Ausnehmung 4 ist, wie der Schnitt gemäss Fig. 2 zeigt, in ihrer Breite durch eine Stufe 11 gegenüber der Breite des Kerns verringert. Mit 12 ist ein Spannelement zum Befestigen der Magnetanordnung bezeichnet.

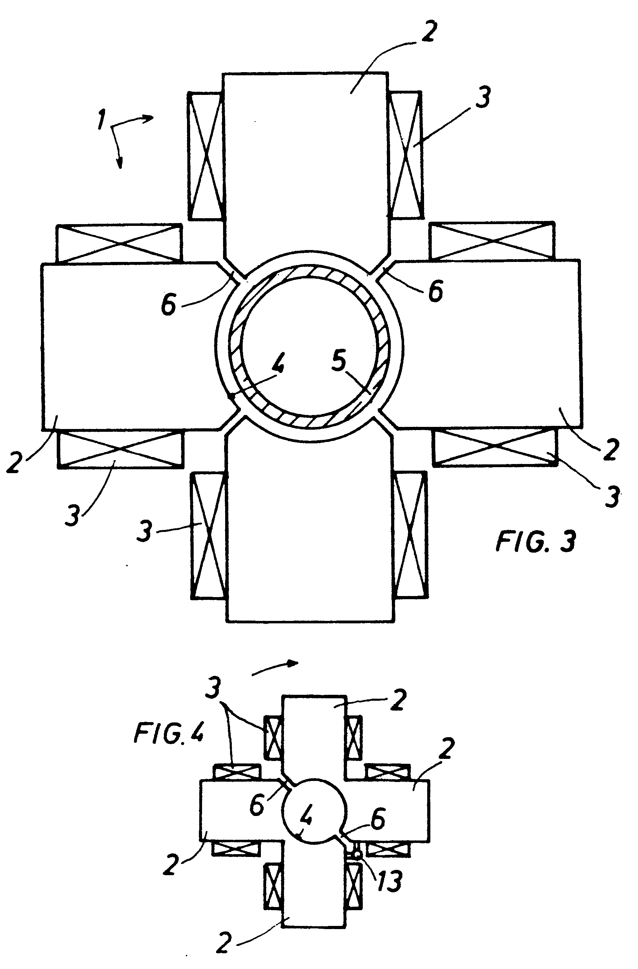

Fig. 3 zeigt eine entsprechende Anordnung mit vier Magneten 1, die rechtwinkelig zueinander rings um den Rohrquerschnitt 5 angeordnet sind.

An ihren ringseitigen Enden sind sie abgeschrägt, so dass sich der Querschnitt etwas verengt. Unter Bildung der Lücken 6 ergeben sie mit ihren einander zugewandten Ausnehmungen 4 die Innenfläche eines die Nahtbahn umgebenden Zylinders.

Die Anordnung gemäss Fig. 4 besteht aus zwei einstückigen Körpern aus ferromagnetischem Material, die jeweils zwei rechtwinkelig zueinander angeordnete, die Wicklungen 3 tragende Kerne 2 aufweisen. Die beiden Teile sind zwischen sich eine durch die Ausnehmungen 4 gebildete ringförmige Innenfläche einschliessend, mittels des Gelenkes 13 um eine zur Zeichenebene senkrechte Achse schwenkbar.

## Patentansprüche

1. Vorrichtung zum elektrischen Lichtbogenschweissen mit magnetisch bewegtem Lichtbogen zweier anschmelzender Werkstücke (5), vorzugsweise Rohrenden, Ringe od. dgl., an einer geschlossenen Nahtbahn mit mindestens zwei in der Schweissebene radial zur Nahtbahn angeordneten gleichpoligen Magneten (1), deren jeweils eine Spulenwicklung (3) tragende, aus Flachmaterial bestehende ferromagnetische Kerne (2) mit ihren Hauptflächen annähernd parallel zur Schweissebene verlaufen und die an ihrem der Nahtbahn zugewandten Ende jeweils eine dem Verlauf der Nahtbahn angeprasste, diese annähernd vollständig überdeckende bogenartige Ausnehmung (4) aufweisen, dadurch gekennzeichnet, dass die Sehne des Bogens der jeweiligen Ausnehmung (4) kleiner ist als die sich in der Schweissebene erstreckende Innenabmessung der Spulenwicklung (3).

2. Vorrichtung nach Anspruch 1, dadurch gekennzeichnet, dass die jeweilige bogenartige Ausnehmung (4) am nahtbahnseitigen Ende der Form eines Halbzylinders entspricht.

3. Vorrichtung nach Anspruch 1, dadurch gekennzeichnet, dass benachbarte Kerne (2) an ihren nahtbahnseitigen Enden unter Bildung eines radialen Schlitzes (6) abgeschrägt sind.

4. Vorrichtung nach Anspruch 1, dadurch gekennzeichnet, dass die Magnete durch zwei die Wicklungen (3) tragende Kerne (2) aufweisende einstückige Körper gebildet sind, die mit einer durch die bogenartigen Ausnehmungen (4) gebildeten halbzylindrischen Innenfläche einander gegenüberliegend angeordnet und gegeneinander um eine zu der Schweissebene senkrechte Achse (13) verschwenkbar sind.

5. Vorrichtung nach Anspruch 1 oder folgenden, dadurch gekennzeichnet, dass die Dicke der einzelnen Kerne (2) am nahtbahnseitigen Ende verringert ist.

6. Vorrichtung nach Anspruch 1 oder folgenden, dadurch gekennzeichnet, dass die Kerne (2) in ihrem Inneren Kanäle (7) für den Durchfluss eines Kühlmittels aufweisen.

7. Vorrichtung nach Anspruch 1 oder folgenden, dadurch gekennzeichnet, dass durch mindestens einen Kern (2) ein an der Ausnehmung (4) endender Kanal (9) zum Schutzgas verläuft.

## Claims

1. An apparatus for the electric arc welding with magnetically moved arcs of two melting workpieces (5), preferably pipe ends, rings or the like, on a closed seam path with at least two unipolar magnets (1), which are disposed in the welding plane radially to the seam path and whose ferromagnetic cores (2), which consist of flat material and carry one coil winding (3) in each case, extend with their main surfaces approximately parallel to the welding plane and which magnets have at their ends facing the seam path one arc-like recess (4) in each case, which is adapted to the course of the seam path and covers the latter approximately completely, characterized in that the chord of the arc of each recess (4) is smaller than the inside dimension of the coil winding (3), extending in the welding plane.

2. An apparatus according to Claim 1, characterized in that each arc-like recess (4) corresponds to the shape of a semicylinder at the end on the side of the seam path.

3. An apparatus according to Claim 1, characterized in that adjacent cores (2) are bevelled at their ends on the side of the seam path forming a radial slot (6).

4. An apparatus according to Claim 1, characterized in that the magnets are formed by two one-piece bodies which have cores (2) carrying windings (3), are disposed opposite each other with a semicylindrical inner surface, formed by the arc-like recesses (4), and are pivotable towards each other about an axis (13) which is perpendicular to the welding plane.

5. An apparatus according to Claim 1 or the following claims, characterized in that the thickness of the individual cores (2) is decreased at the end on the side of the seam path.

6. An apparatus according to Claim 1 or the following claims, characterized in that the cores (2) have channels (7) in their interiors for the passage of a coolant.

7. An apparatus according to Claim 1 or the following claims, characterized in that a channel (9), which ends at the recess (4) and is for supplying protective gas, extends through at least one core (2).

## Revendications

1. Dispositif pour le soudage à l'arc électrique, utilisant un arc déplacé magnétiquement, de deux pièces à traiter (5) commençant à fondre, de préférence des extrémités de tubes, des anneaux ou analogues, au niveau d'une piste fermée de soudure comportant au moins deux aimants de même polarité (1) disposés dans le plan de soudage radialement par rapport à la piste de soudure et dont les noyaux ferromagnétiques (2) constitués par un matériau plat et portant un bobinage (3) s'étendent par leurs surfaces principales approximativement parallèlement au plan de soudage et qui comportent, au niveau de leur extrémité tournée vers la piste de soudure, un évidement (4) en forme d'arc de cercle, adapté à la forme de la piste de soudure et recouvrant approximativement parfaitement cette dernière, caractérisé par le fait que la corde de l'arc de cercle de l'évidement (4) a une dimension inférieure à la dimension intérieure du bobinage (3), prise dans le plan de soudage.

2. Dispositif suivant la revendication 1, caractérisé par le fait que l'évidement (4) en forme d'arc de cercle, présent sur l'extrémité située du côté de la piste de soudure, correspond à la forme d'un demi-cylindre.

3. Dispositif suivant la revendication 1, caractérisé par le fait que des noyaux voisins (2) sont biseautés, au niveau de leurs extrémités situées du côté de la piste de soudure, de manière à former une fente radiale (6).

4. Dispositif suivant la revendication 1, caractérisé par le fait que les aimants sont constitués par des corps d'une seule pièce, comportant deux noyaux (2) portant les bobinages (3) et qui sont disposés mutuellement en vis-à-vis par leurs surfaces intérieures cylindriques formées par les évidements en forme d'arc de cercle (4) et peuvent pivoter l'un par rapport à l'autre autour d'un axe (13) perpendiculaire au plan de soudage.

5. Dispositif suivant la revendication 1 ou les suivantes, caractérisé par le fait que l'épaisseur des différents noyaux (2) est réduite au niveau de l'extrémité située du côté de la piste de soudage.

6. Dispositif suivant la revendication 1 ou les suivantes, caractérisé par le fait que les noyaux (2) comportent, en leur intérieur, des canaux (7) permettant le passage d'un fluide de refroidissement.

7. Dispositif suivant la revendication 1 ou les suivantes, caractérisé par le fait qu'un canal (9) se terminant au niveau de l'évidement (4) et servant à amener un gaz inerte, traverse au moins un noyau (2).

FIG. 1

FIG. 2

FIG. 3

FIG. 4